# EUROPEAN PATENT APPLICATION

(11) **EP 1 628 466 A1**
(43) Date of publication of application: **22.02.2006**
(21) Application number: 04733918.9
(22) Date of filing: 19.05.2004
(51) Int. Cl.: H04N 1/387

(54) **WATERMARK INFORMATION EMBEDDING DEVICE, IMAGE PROCESSING DEVICE, WATERMARK INFORMATION EMBEDDING METHOD, AND IMAGE PROCESSING METHOD**

(30) Priority: 28.05.2003 JP 2003150803
(71) Applicant: Oki Electric Industry Company, Limited, Tokyo 105-8460 (JP)
(72) Inventor: MAENO, Kurato; c/o Oki Electric Industry Co., Ltd., 1058460 (JP)
(74) Representative: Betten & Resch
(86) International application number: PCT/JP2004/006732
(87) International publication number: WO 2004/107734

(57) **Abstract**

A watermark information embedding apparatus capable of embedding a plurality of different types of information together in a document is provided. In a pattern table 19, (1) a permanent dot pattern which is to remain after a document is copied and (2) a temporary dot pattern which is to be erased as the document is copied, are both allocated to each of symbols constituting confidential information and they are classified and managed as hyper-complex matrices. A watermark image is formed based upon anti-copy information used to determine whether the permanent dot pattern or the temporary dot pattern is to be set. Since this allows both the anti-copy information and the confidential information to be embedded together in the document, duplication of the document containing the confidential information embedded therein can be deterred.

## Description

### BACKGROUND OF THE INVENTION

### Field of the Invention

The present invention relates to a technology whereby confidential information is added into a document image in a form other than text.

### Description of the Related Art

There are technologies adopted in practical applications in recent years that allow various types of information to be included in a document by embedding black pixels (dots) in the background of the document with specific methods. Examples of such information include anti-copy information used to deter duplication of a document on a copier, density information with regard to a base dot matrix pattern used to draw a pattern in the background of the document (hereafter simply referred to as density information) and confidential information (also referred to as sensitive information or undisclosed information) generated as an electronic watermark, detectable with a specific type of detection device.

Anti-copy information is used in anti-copy technologies whereby a pattern drawn over the base dot matrix of a document in such a manner that it is not readily visible to the human eye emerges as a visually perceptible pattern when the document is duplicated on a copier due to the characteristics of the copier (see, for instance, Japanese Laid Open Patent Publication No. H2-29679). Density information generated by disposing dots with varying average density levels in the background of a document is used to draw a visible pattern. With confidential information (sensitive information or undisclosed information), a specific type of information can be detected by detecting with a detection device dots embedded in the background of a document in a specific pattern.

### SUMMARY OF THE INVENTION

It may sometimes be desirable to simultaneously embed a plurality of types of information, such as those described above all in a single document. For instance, there is the need for a document with both anti-copy information and confidential information embedded together therein so as to deter duplication of the document containing the confidential information and a document having embedded therein both density information and confidential information so as to indicate the importance of the document carrying the confidential information. However, if a base dot matrix pattern for duplication deterrence or for pattern drawing is printed over the electronic watermark constituting the confidential information, the base dot matrix pattern becomes noise in the electronic watermark and the information embedded as the electronic watermark can no longer be extracted. In addition, if base dot matrix patterns with different cycles are simply superimposed, interference fringes may manifest.

An object of the present invention, which has been completed by addressing the problems of watermark information embedding apparatuses in the related art discussed above, is to provide a new and improved watermark information embedding apparatus, a new and improved image processing device, a new and improved watermark information embedding method and a new and improved image processing method, with which a plurality of types of information such as anti-copy information and confidential information or density information and confidential information can be embedded in the document together.

In order to achieve the object described above, the present invention provides a confidential information embedding apparatus that embeds confidential information in a document through electronic watermarking, comprising the following components.
- A document image forming unit that, based upon document data, generates a document image in correspondence to each page
- A pattern table used to manage in a table a permanent dot pattern that is to remain even after the document is copied and a temporary dot pattern that is to be erased as the document is copied, both allocated to each of symbols constituting the confidential information,
- A watermark image forming unit that draws a pattern on the document image based upon the confidential information and anti-copy information used to determine whether or not the permanent dot pattern or the temporary dot pattern is to be set
   It is to be noted that in place of the watermark image forming unit described above, the following components may be included.
- A watermark image forming unit that forms a watermark image based upon the confidential information and anti-copy information used to determine whether the permanent dot pattern or the temporary dot pattern is to be set
- A watermarked image composition unit that creates a watermarked document image by superimposing the document image and the watermark one on top of the other

The above described invention is characterized by the pattern table included therein. Namely, (1) a permanent dot pattern that remains after the document is copied and (2) a temporary dot pattern that is erased when the document is copied are both allocated to each of the symbols constituting the confidential information, and these dot patterns are classified and managed as hyper-complex matrices in the pattern table. The watermark image is formed based upon the anti-copy information used to determine whether the permanent dot pattern or the temporary dot pattern is set. In this manner, the anti-copy information and the confidential information can both be embedded in the document together so as to deter duplication of the document with the confidential information embedded therein.

The permanent dot pattern and the temporary dot pattern are patterns of dots arranged along varying wave directions and/or in varying dot arrays. The confidential information may be provided by assigning a dot pattern to each symbol and disposing such dot patterns in a specific combination. Through the use of such dot patterns, dots can be disposed substantially uniformly in the background of the document so that a third-party cannot readily perceive the presence of the anti-copy information and the confidential information embedded in the document.

The permanent dot pattern may be, for instance, a pattern that includes dots concentrated in part of the dot pattern. The temporary dot pattern may be a pattern with black pixels uniformly dispersed in the dot pattern.

In order to achieve the object described above, the present invention provides a confidential information embedding apparatus that embeds confidential information in a document through electronic watermarking, comprising the following components.
- A document image forming unit that generates a document image in correspondence to each page based upon document data
- A pattern table used to manage in a table a first density dot pattern and a second density dot pattern with density levels different from each other both allocated to each of symbols constituting the confidential information,
- A watermark image forming unit that draws a pattern on the document image based upon the confidential information and density information used to determine whether the first density dot pattern or the second density dot pattern is to be set
   It is to be noted that in place of the watermark image forming unit described above, the following components may be included.
- A watermark image forming unit that forms a watermark image based upon the confidential information and density information used to determine whether the first density dot pattern or the second density dot pattern is to be set
- A watermarked image composition unit that creates a watermarked document image by superimposing the watermark and the document image one on top of the other

The above described invention is characterized by the pattern table included therein. Namely, each of the symbols constituting the confidential information is allocated with the first density dot pattern and the second density dot pattern with varying density levels, which are classified and managed as hyper-complex matrices in the pattern table. The watermark image is formed based upon the density information used to determine whether the first density dot pattern or the second density dot pattern is to be set. Thus, the density information and the confidential information can be embedded together in the document. Since a pattern can be drawn in the background of the document based upon the density information, the importance of the document can be indicated and tampering with the document can be prevented.

The permanent dot pattern and the temporary dot pattern are patterns of dots arranged along varying wave directions and/or in varying dot arrays. The confidential information may be provided by assigning a dot pattern to each symbol and disposing such dot patterns in a specific combination. Through the use of such dot patterns, dots can be disposed substantially uniformly in the background of the document so that a third-party cannot readily perceive the presence of the anti-copy information and the confidential information embedded in the document.

In order to achieve the object described above, the present invention provides a confidential information embedding apparatus that embeds confidential information in a document through electronic watermarking, comprising the following components.
- A document image forming unit that generates a document image in correspondence to each page based upon document data
- A pattern table to be used to manage in a table n types of permanent dot pattern with varying density levels, which remain even after the document is copied, and n types of temporary dot patterns with varying density levels, which are erased as the document is copied, all allocated to each of symbols constituting the confidential information
- A watermark image forming unit that draws a pattern over the document image based upon the confidential information, anti-copy information used to determine whether a permanent dot pattern or a temporary dot pattern is to be set and density information used to determine a specific density level of the dot pattern to be set among the n density levels
   It is to be noted that in place of the watermark image forming unit described above, the following components may be included.
- A watermark image forming unit that forms a watermark image based upon the confidential information, anti-copy information used to determine whether the permanent dot pattern or the temporary dot pattern is to be set and density information used to determine a specific density level of the dot pattern to be set among the n density levels
- A watermarked image composition unit that creates a watermarked document image by superimposing the watermark on and document image one on top of the other

The above described invention is characterized by the pattern table included therein. Namely, (1) a permanent dot pattern which remains after the document is copied and (2) a temporary dot pattern which is erased as the document is copied are both allocated to each of the symbols constituting the confidential information. The permanent dot pattern and the temporary dot pattern are each available as n types of dot patterns with varying density levels. These dot patterns are classified and managed as hyper-complex matrices in the pattern table. The watermark image is formed based upon the anti-copy information used to determine whether the permanent dot pattern or the temporary dot pattern is to be set and the density information used to determine the specific density level of the dot pattern among the n density levels. As a result, the anti-copy information, the density information and the confidential information can all be embedded in the document together. Duplication of the document containing the confidential information embedded therein is deterred and, at the same time, a pattern can be drawn in the background of the document based upon the density information to indicate the importance of the document and deter tampering on the document.

The permanent dot pattern and the temporary dot pattern are patterns of dots arranged along varying wave directions and/or in varying dot arrays. The confidential information may be provided by assigning a dot pattern to each symbol and disposing such dot patterns in a specific combination. Through the use of such dot patterns, dots can be disposed substantially uniformly in the background of the document so that a third-party cannot readily perceive the presence of the anti-copy information and the confidential information embedded in the document.

The permanent dot pattern may be, for instance, a pattern that includes dots concentrated in part of the dot pattern. The temporary dot pattern may be a pattern with black pixels uniformly dispersed in the dot pattern.

In order to achieve the object described above, the present invention provides an image processing device, comprising a data input means for inputting document data with specific information added thereto and a pattern generating means for generating a machine-readable pattern based upon the specific information. The machine-readable pattern generated based upon the specific information includes a permanent dot pattern that remains after the document is copied and a temporary dot pattern that is erased as the document is copied.

In order to achieve the object described above, the present invention provides a confidential information embedding method for embedding confidential information in a document through electronic watermarking, comprising the following steps.
- A document image forming step in which a document image is created in correspondence to each page based upon document data
- A watermark image forming step in which a pattern is drawn over the document image based upon the confidential information and anti-copy information used to determine whether a permanent dot pattern or a temporary dot pattern is to be set

It is to be noted that the permanent dot pattern to remain even after the document is copied and the temporary dot pattern to be erased as the document is copied, both allocated to each of symbols constituting the confidential information, are managed in a pattern table.

The method described above may include the following steps in place of the watermark image forming step.
- A watermark image forming step in which a watermark image is formed based upon the confidential information and anti-copy information used to determine whether a permanent dot pattern or a temporary dot pattern is to be set
- A watermarked image composition step in which a watermarked document image is created by superimposing the document image and the watermark image one on top of the other

According to the above described invention, (1) a permanent dot pattern that remains after the document is copied and (2) a temporary dot pattern that is erased when the document is copied are both allocated to each of the symbols constituting the confidential information, and these dot patterns are classified and managed as hyper-complex matrices in the pattern table. The watermark image is formed based upon the anti-copy information used to determine whether the permanent dot pattern or the temporary dot pattern is set. In this manner, the anti-copy information and the confidential information can both be embedded in the document together so as to deter duplication of the document with the confidential information embedded therein.

The permanent dot pattern and the temporary dot pattern are patterns of dots arranged along varying wave directions and/or in varying dot arrays. The confidential information may be provided by assigning a dot pattern to each symbol and disposing such dot patterns in a specific combination. Through the use of such dot patterns, dots can be disposed substantially uniformly in the background of the document so that a third-party cannot readily perceive the presence of the anti-copy information and the confidential information embedded in the document.

The permanent dot pattern may be, for instance, a pattern that includes dots concentrated in part of the dot pattern. The temporary dot pattern may be a pattern with black pixels uniformly dispersed in the dot pattern.

In order to achieve the object described above, the present invention provides a confidential information embedding method for embedding confidential information in a document through electronic watermarking, comprising the following steps.
- A document image forming step in which a document image is created in correspondence to each page based upon document data
- A watermark image forming step in which a pattern is drawn over the document image based upon the confidential information and density information used to determine whether a first density dot pattern or a second density dot pattern is to be set

It is to be noted that the first density dot pattern and the second density dot pattern with varying density levels both allocated to each of the symbols constituting the confidential information, are managed in a pattern table.

The method described above may include the following steps in place of the watermark image forming step.
- A watermark image forming step in which a watermark image is formed based upon the confidential information and density information used to determine whether a first density dot pattern or a second density dot pattern is to be set
- A watermarked image composition step in which a watermarked document image is created by superimposing the document image and the watermark information one on top of the other

According to the above described invention, each of the symbols constituting the confidential information is allocated with the first density dot pattern and the second density dot pattern with varying density levels, which are classified and managed as hyper-complex matrices in the pattern table. The watermark image is formed based upon the density information used to determine whether the first density dot pattern or the second density dot pattern is to be set. Thus, the density information and the confidential information can be embedded together in the document. Since a pattern can be drawn in the background of the document based upon the density information, the importance of the document can be indicated and tampering with the document can be deterred.

The permanent dot pattern and the temporary dot pattern are patterns of dots arranged along varying wave directions and/or in varying dot arrays. The confidential information may be provided by assigning a dot pattern to each symbol and disposing such dot patterns in a specific combination. Through the use of such dot patterns, dots can be disposed substantially uniformly in the background of the document so that a third-party cannot readily perceive the presence of the anti-copy information and the confidential information embedded in the document.

In order to achieve the object described above, the present invention provides a confidential information embedding method for embedding confidential information in a document through electronic watermarking, comprising the following steps.
- A document image forming step in which a document image is created in correspondence to each page based upon document data
- A watermark image forming step in which a pattern is drawn over the document image based upon the confidential information, anti-copy information used to determine whether a permanent dot pattern or a temporary dot pattern is to be set and density information used to determine a specific density level of the dot pattern to be set among n density levels

It is to be noted that the n types of permanent dot patterns with varying density levels to remain even after the document is copied and the n types of temporary dot patterns with varying density levels to be erased as the document is copied, allocated to each of symbols constituting the confidential information, are managed in a pattern table.
The method described above may include the following steps in place of the watermark image forming step.
- A watermark image forming step in which a watermark image is formed based upon the confidential information, anti-copy information used to determine whether a permanent dot pattern or a temporary dot pattern is to be set and density information used to determine a specific density level of the dot patterns to be set among n density levels
- A watermarked image composition step in which a watermarked document image is created by superimposing the document image and the watermark image one on top of the other

According to the above described invention (1) a permanent dot pattern which remains after the document is copied and (2) a temporary dot pattern which is erased as the document is copied are both allocated to each of the symbols constituting the confidential information. The permanent dot pattern and the temporary dot pattern are each available as n types of dot patterns with varying density levels. These dot patterns are classified and managed as hyper-complex matrices in the pattern table. The watermark image is formed based upon the anti-copy information used to determine whether the permanent dot pattern or the temporary dot pattern is to be set and the density information used to determine the specific density level of the dot pattern among the n density levels. As a result, the anti-copy information, the density information and the confidential information can all be embedded in the document together. Duplication of the document containing the confidential information embedded therein is deterred and, at the same time, a pattern can be drawn in the background of the document based upon the density information to indicate the importance of the document and deter tampering on the document.

The permanent dot pattern and the temporary dot pattern are patterns of dots arranged along varying wave directions and/or in varying dot arrays. The confidential information may be provided by assigning a dot pattern to each symbol and disposing such dot patterns in a specific combination. Through the use of such dot patterns, dots can be disposed substantially uniformly in the background of the document so that a third-party cannot readily perceive the presence of the anti-copy information and the confidential information embedded in the document.

The permanent dot pattern may be, for instance, a pattern that includes dots concentrated in part of the dot pattern. The temporary dot pattern may be a pattern with black pixels uniformly dispersed in the dot pattern.

In order to achieve the object described above, the present invention provides an image processing method comprising a data input step in which document data having specific information added thereto are input and a pattern generating step in which a machine-readable pattern is generated based upon the specific information. The machine-readable pattern generated based upon the specific information includes a permanent dot pattern to remain even after the document is copied and a temporary dot pattern to be erased as the document is copied.

As explained above, the present invention allows various types of information to be embedded in a document together. More specifically, anti-copy information used to deter duplication of the document on a copier are and confidential information provided as an electronic watermark detectable with a specific type of detection device can be embedded together in the document, or density information with regard to a base dot matrix pattern used to draw a pattern in the background of the document and confidential information can be embedded together in the document.

### BRIEF DESCRIPTION OF THE DRAWINGS

FIG. 1 shows the structure of the watermark information embedding apparatus achieved in a first embodiment;
FIG. 2 presents an example of a dot pattern;
FIG. 3 illustrates anti-copy base dot matrices;
FIG. 4 presents an example of a pattern table that may be used in the first embodiment;
FIG. 5 presents another example of a pattern table that may be used in the first embodiment;
FIG. 6 shows the structure of the watermark information embedding apparatus achieved in a second embodiment;
FIG. 7 presents an example of a pattern table that may be used in the second embodiment;
FIG. 8 shows the structure of the watermark information embedding apparatus achieved in a third embodiment; and
FIG. 9 presents an example of a pattern table that may be used in the third embodiment.

### DETAILED DESCRIPTION OF THE PREFERRED EMBODIMENTS

The following is a detailed explanation of the preferred embodiments of the watermark information embedding apparatus, the image processing device, the watermark information embedding method and the image processing method according to the present invention, given in reference to the attached drawings. It is to be noted that in the specification and the drawings, the same reference numerals are assigned to components having substantially identical functions and structural features to preclude the necessity for a repeated explanation thereof.

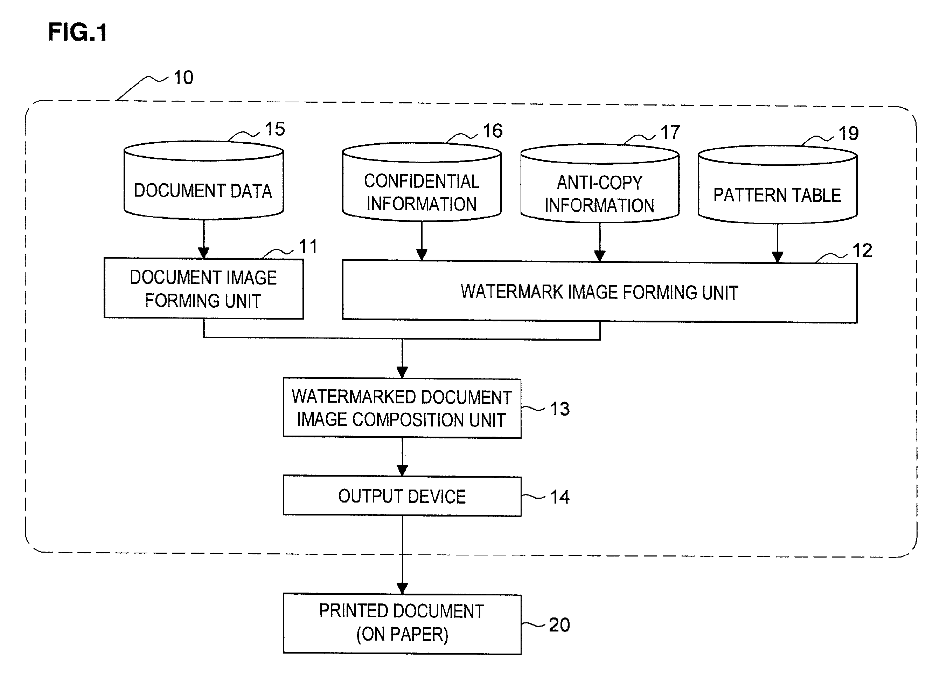

In the following embodiment, an electronic watermarking technology is adopted to embed anti-copy information together with confidential information. FIG. 1 shows the structure adopted in the watermark information embedding apparatus achieved in the embodiment.

### (Watermark information embedding apparatus 10)

The watermark information embedding apparatus 10 creates a document image based upon document data and confidential information to be embedded in the document and prints out the document image onto a paper medium. The watermark information embedding apparatus 10 comprises a document image forming unit 11, a watermark image forming unit 12, a watermarked document image composition unit 13 and an output device 14, as shown in FIG. 1. Document data 15 are data having been created with a document preparation tool or the like. Confidential information 16 is information (such as a character string, an image or audio data) to be embedded in the paper medium in a form other than text. The individual elements constituting the watermark information embedding apparatus 10 are explained in detail below.

### (Document image forming unit 11)

The document image forming unit 11 generates a document image based upon the document data 15 in correspondence to each page. The document image forming unit 11 generates a print preview image of the document data 15. More specifically, a white pixel area in the document image corresponds to a portion of the paper where nothing is printed, whereas a black pixel area in the document image corresponds to a portion of the paper on which black ink is applied. It is to be noted that while an explanation is given in reference to the embodiment by assuming that the document data are printed with black ink (a single color) on a white paper surface, the present invention is not limited to this example and it may be adopted with equal effectiveness when printing the document data in color (multiple colors).

### (Watermark image forming unit 12)

The watermark image forming unit 12 forms a watermark image by obtaining a dot pattern from a pattern table 19 based upon the confidential information 16 and anti-copy information 17. The confidential information 16, the anti-copy information 17 and the pattern table 19 are explained in detail below.

### (Sensitive information 16)

The confidential information 16 is first explained.

The confidential information 16 is handled by first encrypting a character string or the like representing specific confidential information as necessary and then digitizing the encrypted character string or the like to obtain N-complex coded data (N is any natural number equal to or greater than 2. The explanation of the embodiment is given by assuming, for simplification, that N = 2.) Each coded symbol is made to correspond to a dot pattern prepared in advance. A dot pattern is created by arranging dots within a rectangular area of an arbitrary size to indicate a wave running along a given direction with a given wavelength, and a symbol is made to correspond to the specific wave direction or the specific wavelength. A watermark image contains such dot patterns disposed on an image with a given regularity.

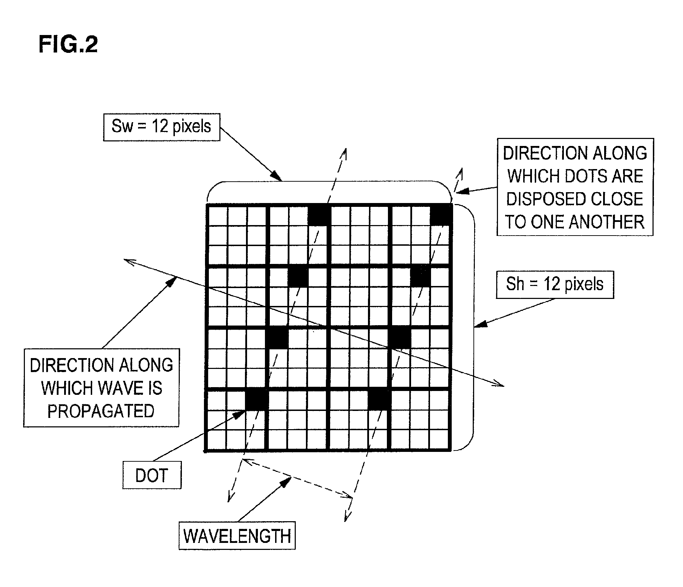

FIG. 2 presents an example of a dot pattern. Sw and Sh respectively represent the width and height of the dot pattern. While Sw and Sh may assume values different from each other, it is assumed that Sw = Sh to simplify the explanation of the embodiment. The width and the height are both expressed in units of pixels and in the example presented in FIG. 2, Sw = Sh = 12 pixels. The size of the signals printed on paper is determined by the resolution of the watermark image, and if, for instance, the resolution of the watermark image is 600 dpi (dots per inch: unit indicating the resolution with number of dots present per inch), the width and the height of the dot pattern in FIG. 2 are both 12/600 = 0.02 (inch) on the printed document. In the dot pattern in FIG. 2, dots are present close to each other along the arctan (3) (arctan is the inverse function of tan) relative to the horizontal axis and the direction along which the wave is propagated is expressed as arctan (- 1/3)

### (Anti-copy information 17)

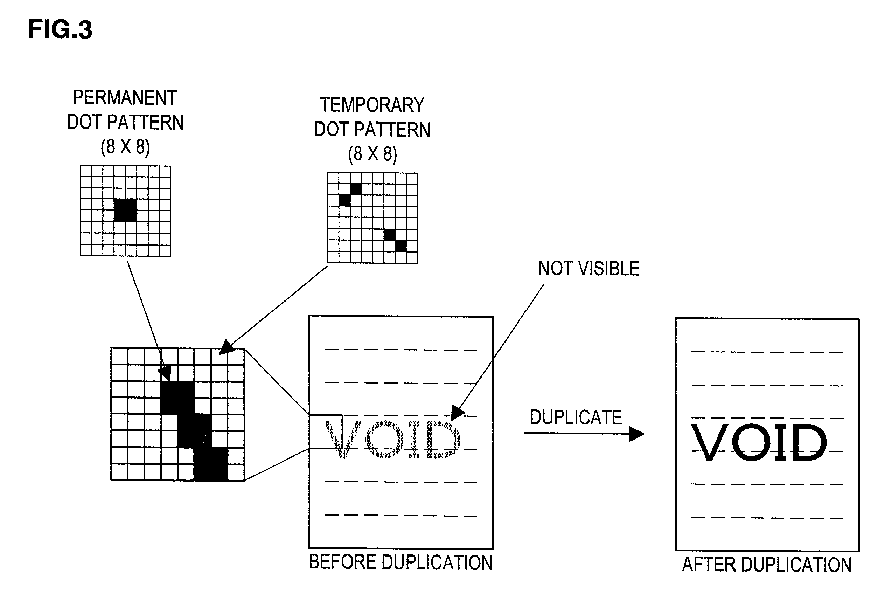

Next, the anti-copy information 17 is explained. There is a technology known as an "anti-copy base dot matrix" whereby a pattern drawn over the base dot matrix of a document in such a manner that it cannot be easily perceived by the human eye emerges as the document is duplicated on a copier as a pattern visible to the human eye due to the characteristics of the copier. This technology is realized by disposing as tiles a plurality of types of dot patterns with average density levels thereof close to each other in the background of the document, as shown in FIG. 3. These dot patterns include permanent dot patterns containing dots to remain even after the document is duplicated and temporary dot patterns to be erased as the document is copied. An area over which a permanent dot pattern is disposed becomes visible to the human eye when the document is duplicated.

For instance, if the permanent dot pattern and the temporary dot pattern are each to be formed over an 8 x 8 pixel area, the permanent dot pattern may be formed to include black pixels concentrated over an area of the pattern and the temporary dot pattern may be formed to include black pixels uniformly dispersed in the pattern. It is to be noted that the shapes and the density levels of the permanent dot pattern and the temporary dot pattern can be adjusted in conformance to the characteristics of the target copier at which duplication needs to be deterred, the characteristics of the printer to be used to print out the document containing embedded information or the like.

The anti-copy information 17 is used to determine whether the permanent dot pattern (cpy = 0) or the temporary dot pattern (cpy = 1) is to be set depending upon the position in the watermark image. This determination may be made by, for instance, using a binary image so as to select the temporary dot pattern over an area corresponding to pixels indicating 1 and select the permanent dot pattern for an area corresponding to pixels indicating 0. Since the temporary dot pattern and the permanent dot pattern are adjusted in correspondence to the specific copier or the printer in use, as described above, a plurality of sets of permanent dot patterns and temporary dot patterns may be prepared in advance, each set in correspondence to a specific target printer or copier, and one set of dot patterns may be selected and used at a given location.

By combining a plurality of sets of anti-copy information 17 in an arbitrary manner, any of various marks can be made to emerge in the copied document. For instance, text such as "copy" indicating that the document is a duplicate, "void" indicating that the document is not a valid document, "not for use" indicating that the use of the document is disallowed or the like, or a mark (e.g., X enclosed in a circle) with a similar meaning may be made to emerge in the duplicated document.

### (Pattern table 19)

Next, the pattern table 19 is explained. The pattern table 19 achieved in the embodiment is used to manage in a table the permanent dot pattern which is to remain even after the document is copied and the temporary dot pattern which is to be erased when the document is copied, both allocated to each of the symbols constituting the confidential information 16. Namely, the pattern table 19 contains patterns, the number of which is equal to the value obtained by multiplying the number of different types of patterns constituting the anti-copy information 17 (two types, the permanent dot pattern and the temporary dot pattern) by the number of symbols constituting the confidential information 16. There will be 4 (= 2²) different types of symbols constituting the confidential information if a single pattern is used to record two-bit data, whereas there will be 2 (= 2¹) symbols constituting the confidential information if a single pattern is used to record one-bit data. A pattern is output from the pattern table 19 in conformance to a specified anti-copy information type and a specified symbol type of confidential information.

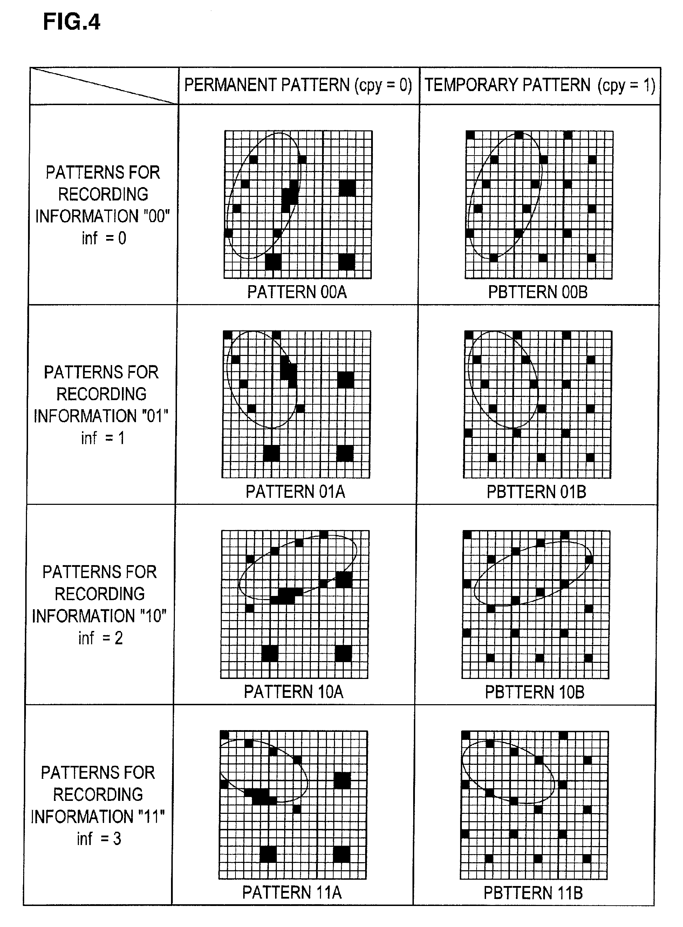

FIG. 4 presents an example of the pattern table 19 that may be used in the embodiment.

A pattern can be output from this pattern table 19 in conformance to a specified anti-copy information type (cpy = 0 or 1) and a specific type of symbol constituting the confidential information (inf = 0 ~ 3). The following is an explanation of the different anti-copy information types and different types of symbols constituting the confidential information.

First, the different types of anti-copy information (cpy = 0, 1) are explained.

There are two types of anti-copy information, i.e., the permanent dot pattern (cpy = 0) and the temporary dot pattern (cpy = 1). The permanent dot pattern (cpy = 0) includes a relatively large spot expressed by using four to six dots. While the duplication capability of a given copier is a critical factor, this point, in principle, remains visible even after the document is duplicated on the copier. These relatively large points are set so as to minimize interference with the frequency component of the pattern used to record the electronic watermark signal and to amplify the signal in some cases. The temporary dot pattern (cpy = 1) includes uniformly dispersed dots and is erased when the document is duplicated on the copier.

Next, the different types of symbols (inf = 1, 2, 3) constituting the confidential information are explained.

The type of the specific symbol constituting the confidential information is recorded over the oval area on each pattern in FIG. 4.

In FIG. 4(1), dots are set close to each other along the direction of arctan (3) (arctan is the inverse function of tan) relative to the horizontal axis, with the direction along which the wave is propagated expressed as arctan (-1/3). Two-bit information "00", for instance, may be allocated to this dot pattern (inf = 0).

Likewise, dots are set close to each other along the direction of arctan (-3) relative to the horizontal axis, with the direction along which the wave is propagated expressed as arctan (1/3) in FIG. 4(2). Two-bit information "01", for instance, may be allocated to this dot pattern (inf = 1).

In FIG. 4(3), dots are set close to each other along the direction of arctan (1/3) relative to the horizontal axis, with the direction along which the wave is propagated expressed as arctan (-3). Two-bit information " 10", for instance, may be allocated to this dot pattern (inf = 2).

In FIG. 4(4), dots are set close to each other along the direction of arctan (-1/3) relative to the horizontal axis, with the direction along which the wave is propagated expressed as arctan (3). Two-bit information "11", for instance, may be allocated to this dot pattern (inf = 3).

While the permanent dot patterns and the temporary dot patterns in the example presented in FIG. 4 are each achieved as an 18 x 18 pixel matrix, the permanent dot pattern/temporary dot pattern selection may be made in smaller units, e.g., in units of 6 x 6 pixel areas obtained by dividing each 18 x 18 pixel pattern into nine portions or in larger units, e.g., in units of 36 x 36 pixel units each achieved by combining four 18 x 18 pixel patterns. It is to be noted that this concept applies to the subsequent embodiments as well.

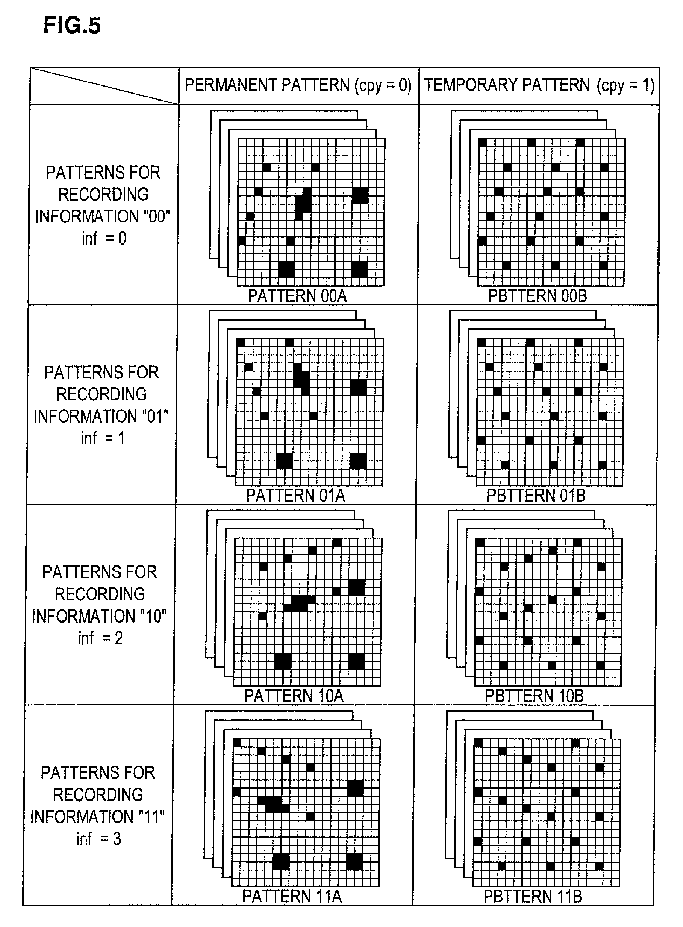

In addition, while a single dot pattern may be allocated in correspondence to one set of information (anti-copy information and confidential information) as shown in FIG. 4, a plurality of dot patterns may be allocated in correspondence to one set of information (anti-copy information and confidential information) and a single dot pattern may be selected from the plurality of dot patterns, as shown in FIG. 5. This concept applies to the subsequent embodiments as well.

Specific details of the confidential information 16, the anti-copy information 17 and the pattern table 19 input to the watermark image forming unit 12 are as explained above. Based upon the confidential information 16 and the anti-copy information 17, the watermark image forming unit 12 obtains dot patterns from the pattern table 19 and forms a watermark image. The image thus obtained assumes an overall pattern that allows an area over which the permanent bit pattern as selected based upon the anti-copy information to emerge as a visible image portion in a duplicate and allows specified data to be retrieved from an embedded information bit string when verifying the watermark.

### (Watermarked document image composition unit 13, output device 14)

The watermarked document image composition unit 13 creates a watermarked document image by superimposing the document image and the watermark image one on top of the other. In addition, the output device 14, which may be a printer or the like, prints out the watermarked document image onto a paper medium. The document image forming unit 11, the watermark image forming unit 12 and the watermarked document image composition unit 13 described so far may be realized as a function in the printer driver.

A printed document 20, printed out by embedding the confidential information 16 in the initial document data 15, is saved and managed physically. In the printed document 20, the anti-copy information and the confidential information are embedded together.

### (Advantage of the first embodiment)

As described above, the embodiment makes it possible to embed anti-copy information and confidential information together in a printed document so as to deter duplication of the document containing the confidential information embedded therein. The anti-copy information does not pose any difficulty in reading the confidential information.

### (Second Embodiment)

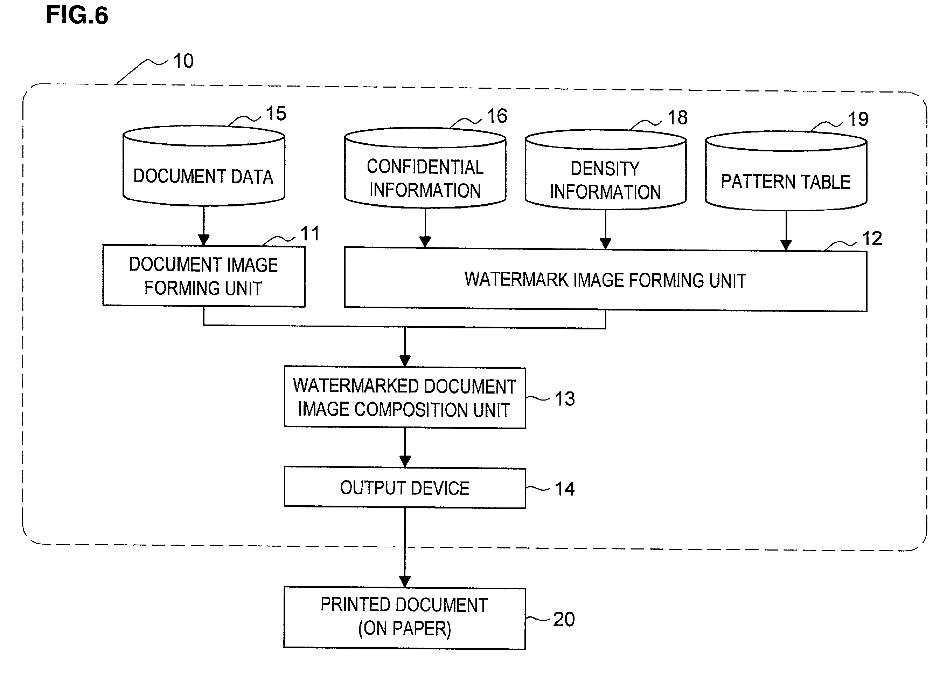

The embodiment is characterized in that density information with regard to a watermark dot matrix array (hereafter simply referred to as density information) and confidential information are embedded together in a document by adopting electronic watermarking technology. FIG. 6 shows the structure of the watermark information embedding apparatus achieved in the embodiment.

In the embodiment, density information 18 is input to the watermark image forming unit 12. Accordingly, dot patterns corresponding to the density information 18 are stored as a table in the pattern table 19. Since all the other features of the embodiment are substantially identical to those of the first embodiment, a repeated explanation thereof is omitted and the density information 18 and the pattern table 19 are described in detail below.

### (Density information 18)

The density information 18 is used to draw a pattern in the background of the document. Any type of graphic drawn in the background of the document may be regarded as congregations of dots. Such drawings can be captured as binary (multi-valued) bit string data conversion executed by using a predetermined threshold value. This means that a pattern can be drawn in the background of the document by using two-dimensional (n dimensional) bit string information. The density information 18 is two-dimensional (n dimensional) bit string information used to draw a pattern in the background of the document.

### (Pattern table 19)

The pattern table 19 is used to manage in a table a first density dot pattern (density pattern = 0) and a second density dot pattern (density pattern = 1) with varying density levels, which are allocated to each of the symbols constituting the confidential information. Namely, in the pattern table 19, patterns, the number of which is equal to a value calculated by multiplying the number of different types of density information 18 (2, i.e., the first density dot pattern and the second density dot pattern) by the number of symbols constituting the confidential information 16. There will be 4 (= 2²) different types of symbols constituting the confidential information if, for instance, a single pattern is used to record two-bit data, and there will be 2 (= 2¹) different types of symbols constituting the confidential information if a single pattern is used to record one-bit data. A given pattern corresponding to a specified density information type and a specified type of confidential information symbol is output from the pattern table 19.

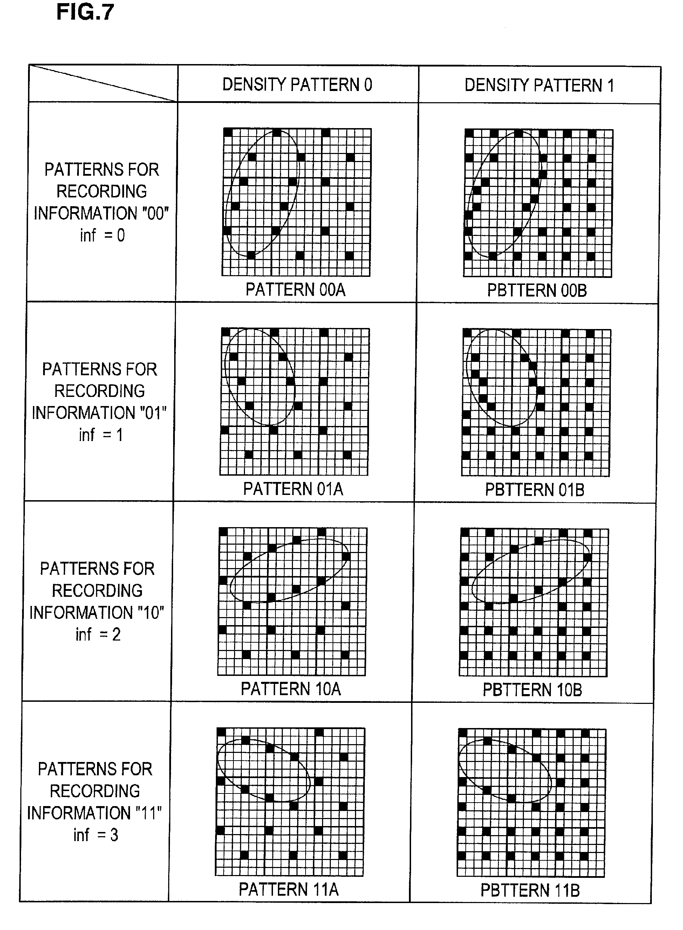

FIG. 7 presents an example of the pattern table 19 that may be used in the embodiment.

As the density information type (density pattern = 0 or 1) and the confidential information symbol type (inf = 0 ~ 3) are specified, a single corresponding pattern is output from the pattern table 19. It is to be noted that while there are two density pattern types in the example presented in FIG. 7, there may be three or more different density pattern types. With a greater number of density pattern types, the pattern drawn in the background can be expressed with multiple value data.

The average density levels of the individual density pattern types are different from each other. The density levels of the density patterns 0 are relatively low and the density levels of the density patterns 1 are relatively high in FIG. 7. Such a difference in the density is created by adding/removing dots at/from positions at which they do not interfere with the frequency component of the pattern used to record electronic watermark signal or they may amplify electronic watermark signal.

The confidential information symbol types (inf = 0 ~ 3) are similar to those in the first embodiment and the type of the specific symbol constituting the confidential information is recorded over the oval area on each pattern in FIG. 7.

### (Advantage of the second embodiment)

As explained above, the embodiment allows both density information and confidential information to be embedded in a document together. Since a pattern can be drawn in the background of the document based upon the density information, the importance of the document can be indicated and tampering on the document can be deterred. The density information does not pose any difficulty in reading the confidential information.

### (Third Embodiment)

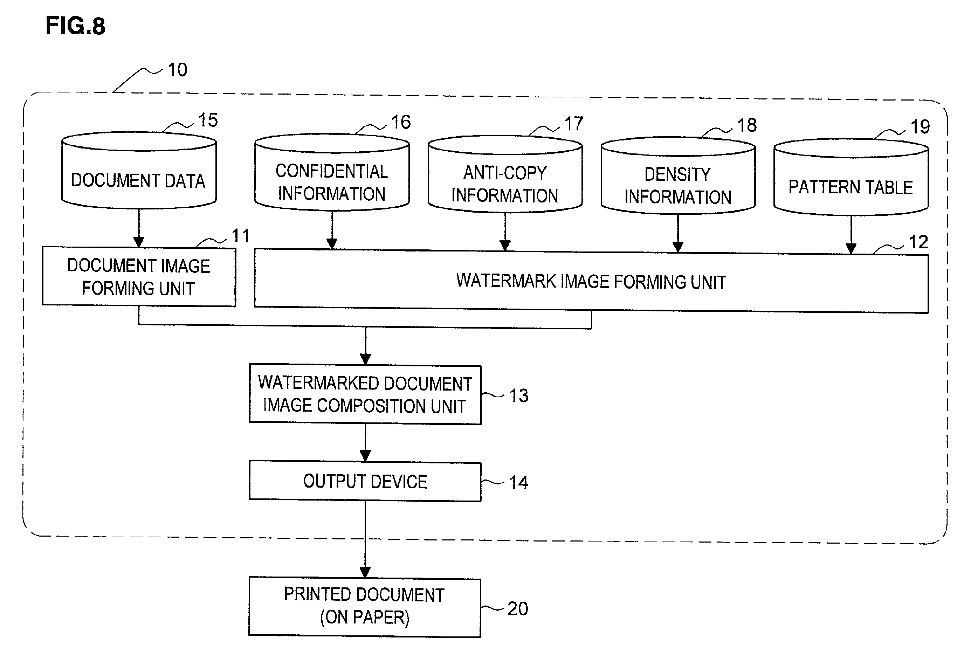

The embodiment is characterized in that anti-copy information, density information and confidential information are all embedded together in a document by adopting an electronic watermarking technology. FIG. 8 shows the structure of the watermark information embedding apparatus achieved in the embodiment.

In the embodiment, anti-copy information 17 and density information 18 are input to the watermark image forming unit 12. Accordingly, dot patterns corresponding to the anti-copy information and the density information are stored in the pattern table 19 as a table. Since the other features of the embodiment are substantially identical to those of the first embodiment, a repeated explanation thereof is omitted, and the pattern table 19 is explained in detail.

### (Pattern table 19)

n (n is a natural number equal to or greater than 2 and n = 3 in the embodiment) types of permanent dot patterns with varying density levels, which are to remain even after the document is accompanied, and n types of temporary dot patterns with varying density levels, which are to be erased when the document is copied, are allocated to each of the symbols constituting the confidential information and are managed in a table at the pattern table 19 achieved in the embodiment. Namely, the pattern table 19 contains patterns, the number of which equals a value obtained by multiplying the number of different types of anti-copy information 17 (2, i.e., the permanent dot pattern and the temporary dot pattern) by the number of different types of density information 18 (3, density = 0, 1, 2) and then by multiplying the product by the number of symbols constituting the confidential information 16. There will be four (= 2²) different types of symbols constituting the confidential information 16 if, for instance, a single pattern is used to record two-bit data, and there will be 2 (2¹) different types of symbols if a single pattern is used to record one-bit data. A given pattern corresponding to a specified anti-copy information type, a specified density information type and a specified confidential information symbol type is output from the pattern table 19.

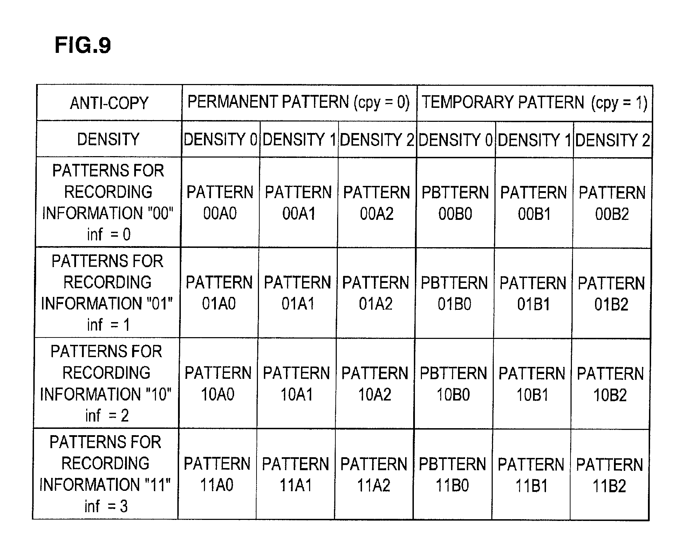

FIG. 9 presents an example of the pattern table 19 that may be used in the embodiment.

As the anti-copy information type (either cpy = 0 or cpy = 1), the density information type (one of the three density types, 0, 1, 2) and the information symbol type (inf = 0 ~ 3) are specified, a single corresponding pattern is output from the table.

### (Advantage of the third embodiment)

As described above, the embodiment allows anti-copy information, density information and confidential information to be embedded together in a document. Thus, duplication of the document containing the confidential information embedded therein can be deterred and, at the same time, a pattern can be drawn in the background of the document based upon the density information to indicate the importance of the document and deter tampering on the document. The anti-copy information and the density information do not pose any difficulty in reading the confidential information.

While the invention has been particularly shown and described with respect to preferred embodiments of the watermark information embedding apparatus, the image processing device, the watermark information embedding method and the image processing method according to the present invention by referring to the attached drawings, the present invention is not limited to these examples and it will be understood by those skilled in the art that various changes in form and detail may be made therein without departing from the spirit, scope and teaching of the invention.

For instance, either of the temporary dot pattern or the permanent dot pattern in the anti-copy base dot matrix may be formed as a pattern which does not include any electronic watermark signal. In such a case, information with redundancy generated by using error correction codes or the like should be embedded.

As described above, the present invention makes it possible to embed a plurality of different types of information together in a document. More specifically, anti-copy information for deterring duplication of the document on a copier and confidential information generated as an electronic watermark that can be detected with a specific type of detection device can be embedded together in the document, or density information with regard to a base dot matrix pattern used to draw a pattern in the background of the document can be embedded together with confidential information in the document.

The present invention may be adopted in a technology for adding confidential information in a document image in a form other than text and, in particular, it may be adopted in a watermark information embedding apparatus, an image processing device, a watermark information embedding method and an image processing method that allow confidential information to be added into a document image in a form other than text.

## Claims

1. A confidential information embedding apparatus that embeds confidential information in a document through electronic watermarking, comprising:
a document image forming unit that generates a document image in correspondence to each page based upon document data;
a pattern table used to manage in a table a permanent dot pattern that remains after the document is copied and a temporary dot pattern that is erased as the document is copied, both allocated to each of symbols constituting the confidential information;
a watermark image forming unit that draws a pattern on the document image based upon the confidential information and anti-copy information used to determine whether the permanent dot pattern or the temporary dot pattern is set.

2. A watermark information embedding apparatus according to claim 1, wherein:
the permanent dot pattern and the temporary dot pattern are patterns of dots arranged along varying wave directions and/or in varying dot arrays and a single symbol is assigned in correspondence to one dot pattern.

3. A watermark information embedding apparatus according to claim 2, wherein:
the permanent dot pattern is a pattern that includes dots concentrated in part of the dot pattern.

4. A watermark information embedding apparatus according to claim 2, wherein:
the temporary dot pattern is a pattern with black pixels uniformly dispersed in the dot pattern.

5. A confidential information embedding apparatus that embeds confidential information in a document through electronic watermarking, comprising:
a document image forming unit that generates a document image based upon document data in correspondence to each page;
a pattern table used to manage in a table a first density dot pattern and a second density dot pattern with density levels different from each other, both allocated to each of symbols constituting the confidential information;
a watermark image forming unit that draws a pattern on the document image based upon the confidential information and density information used to determine whether the first density dot pattern or the second density dot pattern is to be set.

6. A watermark information embedding apparatus according to claim 5, wherein:
the first density dot pattern and the second density dot pattern are patterns of dots arranged along varying wave directions and/or in varying dot arrays and a single symbol is assigned in correspondence to one dot pattern.

7. A confidential information embedding apparatus that embeds confidential information in a document through electronic watermarking, comprising:
a document image forming unit that generates a document image based upon document data in correspondence to each page;
a pattern table to be used to manage in a table n types of permanent dot patterns with varying density levels, which remain even after the document is copied, and n types of temporary dot patterns with varying density levels, which are erased as the document is copied, all allocated to each of symbols constituting the confidential information; and
a watermark image forming unit that draws a pattern over the document image based upon the confidential information, anti-copy information used to determine whether the permanent dot pattern or the temporary dot pattern is to be set and density information used to determine a specific density level of the dot pattern to be set among the n density levels.

8. A watermark information embedding apparatus according to claim 7, wherein:
the permanent dot pattern and the temporary dot pattern are patterns of dots arranged along varying wave directions and/or in varying dot arrays and a single symbol is assigned in correspondence to on dot pattern.

9. A watermark information embedding apparatus according to claim 8, wherein:
the permanent dot pattern is a pattern that includes dots concentrated in part of the dot pattern.

10. A watermark information embedding apparatus according to claim 8, wherein:
the temporary dot pattern is a pattern with black pixels uniformly dispersed in the dot pattern.

11. An image processing device, comprising:
a data input means for inputting document data with specific information added thereto; and
a pattern generating means for generating a machine-readable pattern based upon the specific information; wherein:
the machine-readable pattern generated based upon the specific information includes a permanent dot pattern that remains after the document is copied and a temporary dot pattern that is erased as the document is copied.

12. A confidential information embedding method for embedding confidential information in a document through electronic watermarking, with a permanent dot pattern to remain after the document is copied and a temporary dot pattern to be erased as the document is copied, both allocated to each of symbols constituting the confidential information, managed in a pattern table at a pattern table, comprising:
a document image forming step in which a document image is created in correspondence to each page based upon document data;
a watermark image forming step in which a pattern is drawn over the document image based upon the confidential information and anti-copy information used to determine whether the permanent dot pattern or the temporary dot pattern is to be set

13. A watermark information embedding method according to claim 12, wherein:
the permanent dot pattern and the temporary dot pattern are patterns of dots arranged along varying wave directions and/or in varying dot arrays and a single symbol is assigned in correspondence to on dot pattern.

14. A watermark information embedding method according to claim 13, wherein:
the permanent dot pattern is a pattern that includes dots concentrated in part of the dot pattern.

15. A watermark information embedding method according to claim 13, wherein:
the temporary dot pattern is a pattern with black pixels uniformly dispersed in the dot pattern.

16. A watermark information embedding method for embedding confidential information in a document through electronic watermarking, with a first density dot pattern and a second density dot pattern with varying density levels both allocated to each of symbols constituting the confidential information and managed in a pattern table at a pattern table, comprising:
a document image forming step in which a document image is created based upon document data in correspondence to each page; and
a watermark image forming step in which a pattern is drawn over the document image based upon the confidential information and density information used to determine whether the first density dot pattern or the second density dot pattern is to be set.

17. A watermark information embedding method according to claim 16, wherein:
the first density dot pattern and the second density dot pattern are patterns of dots arranged along varying wave directions and/or in varying dot arrays and a single symbol is assigned in correspondence to on dot pattern.

18. A watermark information embedding method for embedding confidential information in a document through electronic watermarking, with n (n is a natural number equal to or greater than 2) types of permanent dot patterns with varying density levels to remain even after the document is copied and n types of temporary dot patterns with varying density levels to be erased as the document is copied, all allocated to each of symbols constituting the confidential information and managed in a table at a pattern table, comprising:
a document image forming step in which a document image is created based upon document data in correspondence to each page; and
a watermark image forming step in which a pattern is drawn over the document image based upon the confidential information, anti-copy information used to determine whether the permanent dot pattern or the temporary dot pattern is to be set and density information used to determine a specific density level of the dot patterns to be set among n density levels

19. A watermark information embedding method according to claim 18, wherein:
the permanent dot pattern and the temporary dot pattern are patterns of dots arranged along varying wave directions and/or in varying dot arrays and a single symbol is assigned in correspondence to on dot pattern.

20. A watermark information embedding method according to claim 19, wherein:
the permanent dot pattern is a pattern that includes dots concentrated in part of the dot pattern.

21. A watermark information embedding method according to claim 19, wherein:
the temporary dot pattern is a pattern with black pixels uniformly dispersed in the dot pattern.

22. An image processing method, comprising:
a data input step in which document data having specific information added thereto are input; and
a pattern generating step in which a machine-readable pattern is generated based upon the specific information, wherein:
the machine-readable pattern generated based upon the specific information includes a permanent dot pattern to remain even after the document is copied and a temporary dot pattern to be erased as the document is copied.
